# EUROPÄISCHE PATENTSCHRIFT

(11) **EP 3 623 533 B1**
(45) Veröffentlichungstag und Bekanntmachung des Hinweises auf die Patenterteilung: **20.07.2022**
(21) Anmeldenummer: 19198557.1
(22) Anmeldetag: 18.08.2017
(51) Int. Cl.: E02F 5/10, E02F 5/12, E02F 5/14, E02F 5/08

(54) **KABELVERLEGE-EINRICHTUNG UND -VERFAHREN**
CABLE HANDLING APPARATUS AND METHOD
DISPOSITIF ET PROCÉDÉ DE POSE DE CÂBLE

(30) Priorität: 08.09.2016 AT 507972016
(43) Veröffentlichungstag der Anmeldung: 18.03.2020
(62) Teilanmeldung aus: 17764317.8
(73) Patentinhaber: LAYJET Micro-Rohr Verlegegesellschaft m.b.H., 8273 Ebersdorf (AT)
(72) Erfinder: DUNST, Wolfgang, 8224 Kaindorf (AT)
(74) Vertreter: Wildhack & Jellinek

(56) Entgegenhaltungen:
- EP-A1- 0 585 188
- EP-A1- 2 239 377
- FR-A1- 2 722 809
- US-A- 4 812 078
- US-A1- 2010 104 374

## Beschreibung

Die vorliegende Erfindung betrifft eine arbeitseffektive und kostengünstige Einrichtung zum unterirdischen Verlegen von Kabeln, Leitungen, Kabeleinziehschläuchen, Fluidschläuchen und/oder dgl.

Schon seit langem besteht für die Verlegung von Kabeln, Leitungen oder Schläuchen aus den verschiedensten Gründen die Tendenz, dieselben nicht oberirdisch oder über Masten zu führen, sondern sie in den Boden zu verlegen.

Auf diese Weise ist der Vorteil gegeben, dass keinerlei, beispielsweise die landwirtschaftliche Tätigkeit behindernde Mastgründungsfundamente, keine sicht- und landschaftsbildstörende Masten und Freileitungen mehr notwendig sind und dass den immer intensiver werdenden Forderungen des Umweltschutzes, den Elektrosmog zu verringern, nachgekommen werden kann.

Selbstverständlich fallen bei unterirdischer Verlegung von beispielsweise Hochspannungskabeln nicht unwesentliche Kostenerhöhungen an und dementsprechend fehlt es nicht an Versuchen, dieselben durch Rationalisierung des Leitungsverlegeverfahrens, insbesondere durch Verringerung des bisher nötigen menschlichen Arbeitseinsatzes in den Griff zu bekommen.

Was die Topografie der Führung von Leitungen, insbesondere Lichtleitkabeln, im ländlichen Raum betrifft, so hat es sich, insbesondere im Sinne der Vermeidung von die Feldarbeit störenden Aufschließungs- und Bauarbeiten einerseits und einer möglichst effektiven Vorgangsweise andererseits, als günstig erwiesen, Kabel und Leitungen unterhalb der Straßen und Wege begleitenden Bankette zu verlegen, was an sich den Nachteil hat, dass die Verlegestrecke meist höher ist, aber letztlich der wesentliche Vorteil gegeben ist, dass mit üblichen straßentauglichen Fahrzeugen, welche sich auf den bzw. entlang der Straßen bewegen können, ohne dieselben verlassen zu müssen, gearbeitet werden kann.

Bei der Verlegung der Kabel und/oder dgl. unterhalb der verkehrswegbegleitenden Bankette, bedarf es keiner Öffnung und Wiederherstellung der Straßendecke selbst, die Fahrzeuge mit den Verlegegeräten bewegen sich langsam entlang des Straßenrandes und behindern so den normalen Straßenverkehr während der Kabelverlegearbeiten nur minimal.

Das bisher übliche Vorgehen bei der Unter-Erde-Kabelverlegung besteht im Wesentlichen darin, dass in den Boden mittels Radfräse eine schmale, jeweils notwendige bzw. gewünschte Verlegetiefe aufweisende Künette eingetieft wird, das hierbei ausgefräste Bodenmaterial seitlich derselben abgelegt wird und das Kabel und/oder dgl., vorzugsweise zusammen mit einem Warnband, in die Künette positionsgerecht eingelegt wird, wonach zuerst unter Zubettung des eingebrachten Kabels und/oder dgl., in die Künette Kabelsand eingebracht und danach dann das vorher seitlich der Künette abgelegte, ausgefräste Bodenmaterial in dieselbe wieder eingebracht, und gegebenenfalls von oben her zumindest verdichtet, wird.

Es wurde bisher gesondert zuerst, z.B. mittels Baggerschaufel die Kabelkünette hergestellt und das hierbei anfallende Bodenmaterial seitlich derselben abgelegt, danach wird die auf einem Fahrzeug herangeschaffte Kabeltrommel auf ein über die Künette postiertes Abspulgestell gelagert und durch die Kabelverlegemannschaft von dort abgezogen und in der Künette abgelegt, dann erfolgt durch - meist händisches - Einschaufeln von Kabelsand die Einbettung des Kabels in demselben und schließlich wird ebenfalls händisch mit Schaufeln die offene Künette mit dem vorher ausgehobenen Bodenmaterial zugeschüttet.

Zum Stand der Technik auf diesem Gebiet seien folgende Schriften genannt:
FR 2 722 809 A1, EP 2 239 377 A1, US 4812078 A, US 3203188 A, US 5743675 A, DE 2504598 A1, US 2010104374 A1, US3332249 A, GB410900 A, US 6189244 B1, US 4871281 A, US 6457267 B1, DE 102014105577 A1, US 2015252551 A1 und JP S5829924 A

Die Erfindung hat sich grundsätzlich zum Ziel gesetzt, mit möglichst geringem Aufwand an körperlicher Arbeit die beschriebenen Schritte der Kabelverlegung im Rahmen eines kontinuierlichen Verlegeprozesses und mit vergleichsweise wesentlich verringertem Zeit- und Arbeitsaufwand zu vollziehen.

Ein ganz wesentliches Ziel der vorliegenden Erfindung ist die Schaffung einer rasch arbeitenden, hochflexiblen und gleichzeitig kompakten Kabelverlegeeinrichtung, durch welche es zum ersten Mal ermöglicht ist, praktisch entlang jedes Verkehrsweges jeglichen, insbesondere kurvenreichen, Verlaufs, unterhalb von deren meisten schmalen, nicht direkt zur Fahrbahn gehörenden Straßenstreifen bzw. Banketten exakt und mit möglichst geringem Aufwand an Zeit und Arbeitskraft Kabel und/oder flexible Leitungen zu verlegen, hiebei jedoch den Straßenunterbau und die Verkehrsfläche, also insbesondere den Straßenbelag, absolut nicht zu verletzen oder in sonstiger Weise zu beschädigen.

Gegenstand der Erfindung ist somit eine fahrbare Einrichtung für das unterirdische Verlegen zumindest einer (biege-)flexiblen Leitung, eines derartigen Kabels, Kabeleinzieh-Leerrohres oder Fluidtransportschlauches unterhalb der Verkehrswege oder Straßen seitlich begleitenden Bankette bzw. Straßenstreifen, wobei in den Untergrund des Banketts mittels Fräsrad einer Fräseinheit eine schmale, jeweils gewünschte Verlegetiefe aufweisende Künette eintiefbar ist, das hierbei ausgefräste Untergrundmaterial seitlich entfernt wird, das bzw. die Kabel und das Warnband in die Künette positionsgerecht einlegbar ist, wobei zur Einbettung der/des eingebrachten Leitung/Kabels oder dgl. in die Künette feinteiliges Untergrundmaterial oder Kabelsand eingebracht und danach das vorher seitlich entfernte ausgefräste Untergrundmaterial in dieselbe wieder einbringbar und verdichtbar ist,
- wobei von einem mit geringer Geschwindigkeit fahrenden Fahrzeug das abzulegende Kabel abziehbar und in die soeben erstellte Kabelkünette synchron zur Fahrgeschwindigkeit des Frontfahrzeugs einlegbar ist, und
- wobei über eine oberhalb der Kabelkünette geführte Auswurfgosse oder -rinne laufend auf die jeweils momentane Fahrgeschwindigkeit abgestimmte Mengen Feinteilmaterial oder Kabelsand in die Kabelkünette einbringbar ist, welche dadurch gekennzeichnet ist,
- dass - insbesondere für die Kabelverlegung entlang eines kurvigen Verkehrswegs - das als Trägerfahrzeug ausgebildete Frontfahrzeug mit rückseitigem Träger bzw. Tragrahmen mit Seitausschubeinheit mit an sie gelenkig gebundener Fräseinheit mit Fräsrad und einer derselben folgenden Schleppschalungs- und Kabelablegeeinheit insgesamt eine fahrbare, kurvengängige, mechanische Gesamt- oder Kompakt-Einheit bildet,
innerhalb welcher die Fräseinheit und mit ihr das Fräsrad gegenüber dem Frontfahrzeug seitlich nach außen versetzt, also über die seitliche Kontur des Frontfahrzeugs seitlich hinausragend positionierbar, mit dem Frontfahrzeug bzw. mit dessen Träger über eine erste Anlenkung bzw. ein Drehgelenk an einer Seitausschubeinheit mit im Wesentlichen vertikaler Drehachse gegenüber derselben nach beiden Seiten hin jeweils in einem Winkel von bis zu ± 25°, insbesondere bis zu ± 20°, seitverschwenkbar verbunden ist,
- wobei die der Fräseinheit folgende Schleppschalungs- und Kabeleinlege- sowie Kabelsandeinbringungseinheit ihrerseits mit der Fräseinheit ebenfalls über eine zweite Anlenkung bzw. ein Drehgelenk mit im Wesentlichen vertikaler Achse gegenüber derselben nach beiden Seiten hin jeweils im Winkel von bis zu ± 25°, insbesondere von bis zu ± 20°, seitverschwenkbar verbunden ist.

Um während des Verlegevorgangs, also während der Verlegefahrt, das Trieb- also Frontfahrzeug mit allen Rädern sicher auf dem festen Straßenunterbau und insbesondere voll auf dem Straßenbelag zu halten und denselben somit sicher zu schonen, aber gleichzeitig in das Bankett die Kabelkünette einzutiefen, ist vorteilhafterweise vorgesehen, dass die im Winkel seitverschwenkbare Fräseinheit mit Fräsrad an eine mit dem Frontfahrzeug bzw. mit dessen Tragrahmen verbundenen Seitausschiebevorrichtung gebunden und an die durch das bestehende, zu unterfahrende Bankett vorgegebenen topografischen Bedingungen anpassbar, bevorzugt hydraulisch, gegenüber dem Frontfahrzeug - zumindest nach einer Seite hin - linear seitverschiebbar ist.

Für das sichere Stabilhalten des eigentlichen Fahrbahn-Unterbaus einerseits und der Kabelkünette während des Verlegevorgangs selbst andererseits, hat es sich als besonders günstig erwiesen, dafür zu sorgen, dass, insbesondere zur Stabilisierung und Stabilhaltung der Wandungen der jeweils soeben erstellten Künette, die Schleppschalungs- und Kabeleinlegeeinheit mit beidseitigen, gegebenenfalls in ihrem Abstand voneinander an die jeweilige Künettenbreite einstellbaren, Schalungsblechen ausgestattet ist, und zum Fräsrad der Fräseinheit hin konkav-kurvig ansteigend möglichst knapp, vorzugsweise bis zu etwa 10 cm, an dasselbe heranreicht.

Da die Zusammensetzung und die Untergrundstruktur der verkehrsweg-begleitenden Bankette von vornherein nicht bekannt ist und es im Laufe der Künettenfräsung zu den Verlegebetrieb empfindlich störender Blockierung des Fräsrades, z.B. durch Gesteinsbrocken, Fels, vergrabenen Gegenständen oder dgl. kommen kann, ist ein wesentlicher Vorteil im Rahmen der Erfindung dann gegeben, wenn die Fräseinrichtung und/oder deren Fräsrad, beispielsweise für den Fall von dessen Blockierung durch unnachgiebiges Untergrundmaterial, hochhebbar ist, ohne dass die mit der Fräseinheit seitverschwenkbar verbundene Schleppschalungs- und Kabeleinlegeeinheit mit ihren beidseitigen, die Stabilität der Künette praktisch durchgehend sichernden Schalungsblechen in ihrer Höhenposition in der Künette zu verändern ist.

Besonders vorteilhaft ist es hiebei, wenn an das Drehgelenk für die Schleppschalungs- und Kabeleinlegeeinheit an der Fräseinheit bzw. an deren Gehäuse beidseitig eine Parallelogramm-Mechanik für das Absenken oder Anheben der Schleppschalungs- und Kabeleinlegeeinheit, insbesondere für ein Anheben der Fräseinheit, gegebenenfalls zusammen mit dem Fräsrad, aus der Künette im Falle einer Blockierung gebunden ist.

Im Sinne des Einsparens von Material- und Wiederherstellungskosten ist erfindungsgemäß vorgesehen, dass dem Fräsrad der Fräseinheit seitlich des Fräsengehäuses ein, mit dem Künettenaushub-material zu beschickendes Förderband beigeordnet ist, welchem ein, vorzugsweise schräg ansteigendes, langgestrecktes Sternsieb mit einer Vielzahl von auf zu dessen Transportrichtung quergestellten Drehachsen montierten, unterschiedlich weit voneinander angeordneten, drehbaren Siebsternen für den Weitertransport des durch das Fräsrad ausgehobenem Bankett-Untergrund-, also Künetten-Aushubmaterials nach rückwärts zur letztendlichen Verfüllung der soeben erstellten Kabelkünette folgt.

Hiebei ist erfindungsgemäß vorgesehen, dass unterhalb des langgestreckten Sternsiebes ein Förderband für den Abtransport des mittels demselben von Künettengrobmaterial getrennten, feinteiligen Künettenfeinmaterials nach rückwärts angeordnet ist.

Erfindungsgemäß ist auch vorgesehen, dass mittels des unterhalb des Sternsiebes angeordneten Transportbandes ein Feinsieb mit dem feinteiligen Aushubmaterial beschickbar ist, und dass das dort abgetrennte, besonders feinteilige bzw. feinstteilige, im Wesentlichen sandartige, Künettenfeinmaterial zumindest teilweise an Stelle von gesondert zugeführtem Kabelsand oder denselben ergänzend für die Ein- und Umbettung des/der in der Kabelkünette abgelegten Kabels und/oder Leitung einsetzbar ist.

Um eine fahrgeschwindigkeits-adäquate und -synchrone Einbringung von feinstteiligem, künetteneigenem, sandartigem Kabelein- und -umbettungsmaterial in die Künette zu ermöglichen, hat es sich erfindungsgemäß als vorteilhaft erwiesen, dafür zu sorgen, dass in der über der Künette geführten Schüttrinne bzw. Auswurfgosse für dieses besonders feinteilige, im Wesentlichen sandartige Künettenaushubmaterial eine den Querschnitt der Schüttrinne überbrückende, eine höhen-veränderliche unterseitige Öffnung freilassende, in ihrer Höhe auf den jeweils per Laufmeter Künette und Kabel gegebenen Bedarf an Kabelein- und -umbettungsfeinmaterial pro Laufmeter Künette und Kabel und/oder Leitung einstellbar ist.

Der Gegenstand der vorliegenden Offenbarung ist also eine Einrichtung mittels welcher im Lichtraum einer Straße Kabel und diverse Leitungen verlegt werden können, ohne dabei beispielsweise die Asphaltfahrbahn zu beschädigen oder den Straßenkörper in irgendeiner Weise instabil zu machen.

Dies erfolgt aufgrund der meist schlanken Baubreite im Bereich von ca. 30 cm sowie einer Künettenbreite von beispielsweise 13 bis 17 cm unter bestmöglicher Schonung der seitlichen Straßenleiteinrichtungen, wie z.B. Leitpflöcke und Straßentafeln. Durch die beiden, in der Kabelverlege-Kompakteinheit vorhandenen Drehgelenke kann die Verlegung von Leitungen problemlos entlang der Kurven jeder richtliniengemäß errichteten Straße erfolgen.

Durch das seitliche Ausfahren der Fräseinheit und mit ihr der gesamten Kompakteinheit über und auf das Bankett ist gewährleistet, dass sich das Front- bzw. Trägerfahrzeug immer auf dem tragfähigen Straßenkörper bewegt, während im seitlichen Randstreifen, also Bankett gefräst werden kann. Die angebaute Schleppschalungseinheit, welche bevorzugt über eine Parallelogramm-Mechanik am Drehgelenk mit dem Gehäuse der Fräseinheit unmittelbar hinter dem Fräsrad verbunden ist, gewährleistet, dass der Straßenkörper seitlich nicht ausrieseln kann und somit während des gesamten Verlegevorgangs voll tragfähig und stabil bleibt.

Zusätzlich ist durch die Führungsrollen im Inneren der Schleppschalungseinheit das knickfreie Verlegen der Kabel bzw. Leitungen gewährleistet und letztlich das Ummanteln der Kabel und/oder Leitungen durch Einbringung von ausreichend feinkörnigem Aushubmaterial und/oder Kabelsand in die Künette ermöglicht.

Das ausgefräste Künettenmaterial wird seitlich auf ein zweigeteiltes Förderband abgelegt und unmittelbar hinter der Schleppschalungseinheit wieder in die Künette eingebracht, womit nach erfolgter Kabelverlegung dieselbe sofort wieder verschlossen ist. Dadurch bleibt die Stabilität des Straßenkörpers während das Verlegevorgangs durchgängig voll erhalten. Aufgrund der Aussiebung von Feinmaterial können vor Ort für den Straßenbau geeignete Körnungen, jeweils abhängig vom jeweils anstehenden Material, hergestellt werden.

Ausgangspunkt und weiterer wesentlicher Gegenstand der Offenbarung ist ein Kabelverlege-Verfahren der eingangs beschriebenen Art, welches dadurch gekennzeichnet ist,
- dass entlang einer jeweils vorgesehenen Kabelverlegestrecke, insbesondere entlang eines Straßenbanketts, ein - zwei in geringem Abstand voneinander hintereinander fahrende **Fahrzeuge** umfassender - Kabelverlegezug vorwärts fortbewegt wird,
- wobei dessen mit geringer Geschwindigkeit fahrendes erstes Fahrzeug die das Kabel und/oder dgl. liefernde Kabeltrommel mit sich führt und hierbei mittels mit ihm antriebs-verbundener Künettenfräse die Kabelkünette aushebt, wobei das ausgefräste Aushubmaterial jeweils mittels eines dieser Künettenfräse seitlich beigeordneten Förderbands nach rückwärts gefördert wird,
- dass in die soeben erstellte Kabelkünette das von der Kabeltrommel synchron zur Fahrgeschwindigkeit des ersten Fahrzeugs abzuziehende bzw. abgezogene Kabel und/oder dgl. eingelegt wird,
- dass über eine heckseitig angeordnete Auswurfgosse des ersten Fahrzeugs, welche von demselben präzise oberhalb der soeben erstellten Kabelkünette und dem in dieselbe eingelegten Kabel und/oder dgl. geführt wird,
- von dem - dem ersten Fahrzeug in, vorzugsweise konstanten, Abstand folgenden, zu dessen Fahrgeschwindigkeit synchrone Fahrgeschwindigkeit aufweisenden - mit oberhalb der Auswurfgosse des ersten Fahrzeugs endendem, nach vorwärts förderndem Sandförderband oder -förderschlauch ausgestatteten zweiten Fahrzeug - laufend auf die momentane Fahrgeschwindigkeit abgestimmte Mengen - Kabelsand pro Laufmeter Fahrtstrecke durch die Auswurfgosse - das Kabel und/oder dgl. zu- und einbettend - in die Kabelkünette eingebracht wird,
- dass unmittelbar danach das mittels des der Künettenfräse beigeordneten Förderbands laufend nach rückwärts geförderte Aushubmaterial über eine Auslaufschütte dieses Förderbandes zurück in die Kabelkünette - dieselbe wieder auffüllend - eingebracht wird.

Dieses Kabelverlege-Verfahren zeichnet sich insbesondere durch den damit erzielbaren raschen Arbeitsfortschritt aus und, wenn auch der technische Aufwand im ersten Augenschein relativ hoch erscheint, so wird derselbe durch die Sauberkeit des Verfahrens und die vergleichsweise hohe Geschwindigkeit der Durchführung und der Wiederherstellung des ursprünglichen Zustands mehr als kompensiert.

Im Rahmen der Offenbarung, insbesondere in dem Sinn der Erreichung hoher Sauberkeit bei dessen Durchführung, hat sich eine Ausführungsform als günstig erwiesen, gemäß welcher vorgesehen ist, dass - an Stelle der Kabelsandzulieferung mit Sandauswurfgosse am ersten Fahrzeug und Sandförderband am zweiten Fahrzeug - ein von demselben mitgeführter, mit seinem Auslaufende von oben direkt in die soeben ausgefräste Kabelkünette ausgerichteter Sandförderschlauch vorgesehen ist, durch welchen der Kabelsand direkt auf und um das soeben in dieselbe eingelegte Kabel und/oder dgl. in die Kabelkünette eingeblasen wird. Hierbei wird erreicht, dass praktisch kein Anteil an Kabelsand woanders landet, als in der Kabelkünette und es fallen Säuberungsarbeiten nach erfolgter Kabelverlegung praktisch weg.

Im Zuge von Erd-Kabelverlege-Verfahren ist es heute üblich, oberhalb des verlegten Kabels ein Warnband in die Künette einzulegen, durch welches das sich unterhalb desselben befindliche Kabel und/oder dgl. im Falle späterer Aushub-, Sanierungs- oder Ergänzungsarbeiten mit Minibaggern oder dgl. möglichst vor Beschädigungen oder eventuell sogar Bruch geschützt wird.

Dementsprechend ist es im Rahmen der hier in Rede stehenden Offenbarung bevorzugt, dafür zu sorgen, dass vom ersten Fahrzeug des Kabelverlegezugs - im wesentlichen synchron mit dem Kabel und/oder dgl. - vorzugsweise im Zuge der Einbringung des Kabelsandes aus dem zweiten Fahrzeug, bzw. dieser Einbringung ummittelbar folgend, und vor der Wiedereinbringung des ausgefrästen lockeren Bodenmaterials von dem Förderband der Künettenfräse des ersten Fahrzeugs das Warnband in die Kabelkünette oberhalb des Kabels und/oder dgl. positionsgerecht in die Kabelkünette eingebracht wird.

Einen ganz wesentlichen Bestandteil bei der Realisierung dieses Kabelverlege-Verfahrens stellt ein Kabelverlegezug dar, welcher **dadurch gekennzeichnet** ist,
- dass der insgesamt mit geringer Geschwindigkeit fahrbare Kabelverlegezug mit einem vorderen, ersten Fahrzeug, insbesondere Traktor, gebildet ist, von dessen, vorzugsweise vorderseitig in eine Lagergabel einzuhängender, Kabeltrommel und, vorzugsweise über oberhalb und rückseitig desselben angeordnete Führungsrollen, das zu verlegende Kabel und/oder dgl. von der Kabeltrommel mit - der jeweils momentanen Fahrgeschwindigkeit entsprechender - Geschwindigkeit abziehbar und in die mittels - ebenfalls am ersten Fahrzeug angeordneter - Künettenfräse soeben ausgehobene Kabelkünette einlegbar ist,
- wobei der Künettenfräse seitlich ein Förderband für die Förderung des eben ausgefrästen lockeren Bodenmaterials nach rückwärts beigeordnet ist, und
- wobei weiters das erste Fahrzeug rückseitig eine kontinuierlich jeweils oberhalb der Kabelkünette mitführbare Sandauswurfsgosse trägt, und
- dass der Kabelverlegezug ein dem vorderen, ersten Fahrzeug in, vorzugsweise konstant, geringem Abstand folgendes, für Aufnahme und Transport von Kabel-Feinsand geeignetes zweites Fahrzeug, insbesondere LKW mit Transportmulde, mit von dessen bzw. deren Sandaustrags- und -dosiereinrichtung ausgehendem und mit seinem freien Austragsende oberhalb der Sandauswurfgosse im Heckbereich des ersten Fahrzeugs zu positionierendem, für die Förderung des Kabelsands nach vorwärts dort hin und dessen Einbringung durch die Sandauswurfgosse hindurch in die Kabelkünette vorgesehenem Sandförderband oder Sandförderschlauch umfasst,
- wobei von der - der Sandauswurfgosse nacheilend angeordneten - Austragsschütte des Förderbands der Künettenfräse des ersten Fahrzeugs aus, das vorher ausgefräste, lockere Bodenmaterial zurück in die Kabelkünette eintragbar ist.

Vorteilhaft im Sinne der Kabelsand-Verbrauchsoptimierung ist es, wenn die Sandaustrags- und -dosiereinrichtung des zweiten Fahrzeugs mit einer, vorzugsweise von demselben aus steuerbaren, Dosiereinrichtung für die eine fahrgeschwindigkeitsabhängige bzw. synchrone Regulierung der Kabelsandabgabe-Menge pro Laufmeter der jeweils zurückgelegten Verlegestrecke ausgerüstet ist.

Was die Aufrechterhaltung des konstanten Abstands zwischen erstem und zweitem Fahrzeug betrifft, so hat es sich als günstig erwiesen, dafür zu sorgen, dass zumindest eines der beiden Fahrzeuge, vorzugsweise beide Fahrzeuge, jeweils mit einem, vorzugsweise vom zweiten Fahrzeug aus steuerbaren, Stufenlos(-Hydraulik)- bzw. - Hydrostat-Antrieb ausgerüstet ist bzw. sind.

Um nach erfolgter Kabelverlegung den ursprünglichen Zustand wieder praktisch voll herzustellen, ist bevorzugterweise vorgesehen, dass das zweite Fahrzeug mit einem Rüttel- und Stampforgan für das Verdichten des in die vorher erstellte Kabelkünette wieder zurück geförderten, vorher ausgefrästen, lockeren Bodenmaterials ausgerüstet ist.

Für die Einhaltung des konstanten Abstandes zwischen dem ersten und dem zweiten Fahrzeug während deren mit geringer Geschwindigkeit erfolgender synchroner Vorwärtsbewegung sorgt eine - bevorzugt im zweiten Fahrzeug angeordnete - computergesteuerte Fahrgeschwindigkeitssynchronisiereinrichtung, mittels welcher auch der geschwindigkeitsabhängig dosierbare Austrag des Kabelsandes pro Laufmeter Kabelverlegungsstrecke aus der Mulde des zweiten Fahrzeugs in die Kabelkünette regulierbar ist. Selbstverständlich verfügt der Kabelverlegezug über zumindest eine GPS-Sonde, sodass der topografische Verlauf des verlegten Kabels und/oder dgl. exakt bestimmt und registriert werden kann, sodass derselbe für spätere Adaptionsprozesse oder dgl. problemlos genau rekonstruiert und nachvollzogen werden kann.

Anhand der Zeichnung wird die erfindungsgemäße Vorrichtung und das Kabelverlege-Verfahren näher erläutert:

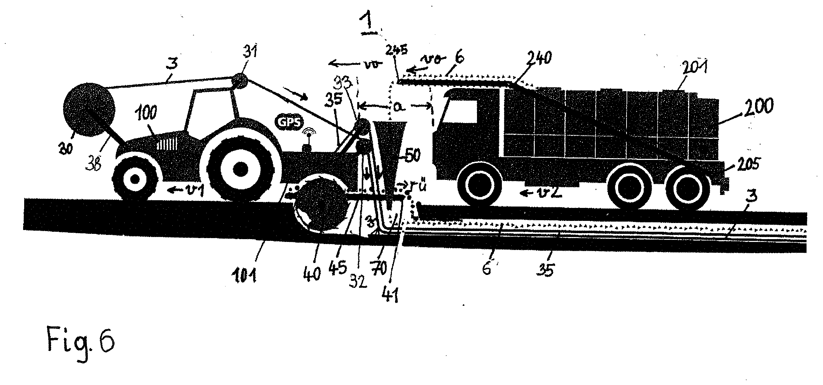

Die Fig. 1 bis 4 zeigen anhand von Darstellungen in Sichten von oben von beiden Seiten und von hinten den Aufbau der Kabelverlege-Kompakteinrichtung, und die Fig. 5 und 6 erläutern das Verfahren näher.

Es zeigen die Fig. 1 die erfindungsgemäße Verlegeeinrichtung in Draufsicht, die Fig. 2 dieselbe in Seitenansicht von der Straße her, die Fig. 3 diese Einrichtung in Seitenansicht von außen zur Straße hin und die Fig. 4 in Rückansicht und die Fig. 5 und 6 erläutern das Verfahren.

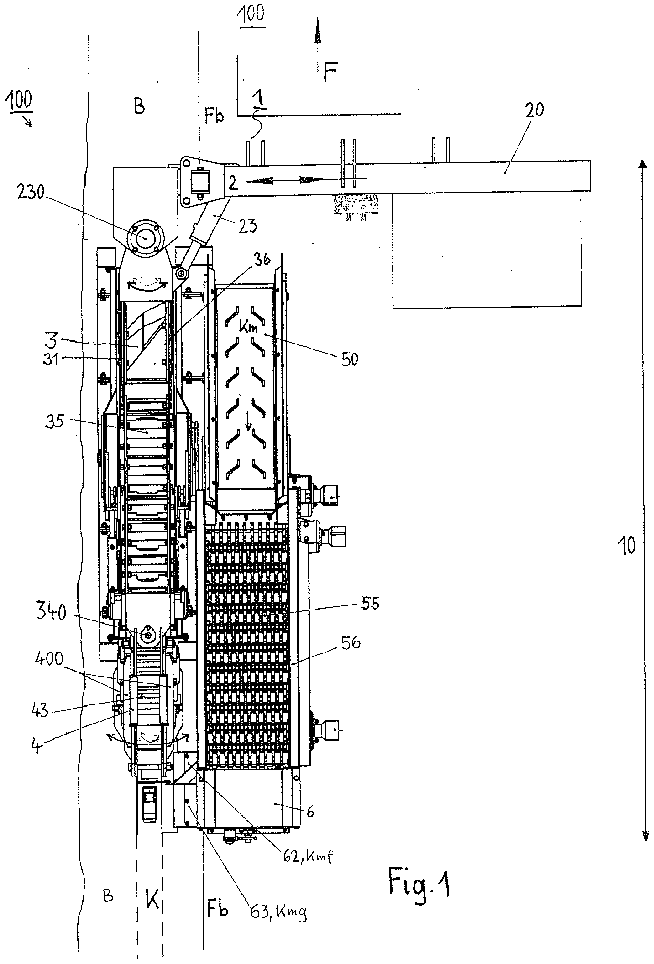

Die Fig. 1 zeigt, wie an einem als solches nur schematisch angedeuteten, in Fahrtrichtung F fahrenden, strikt auf dem Fahrbahnbelag Fb verbleibenden Zugfahrzeug 1, beispielsweise Traktor, rückseitig ein Träger bzw. Tragrahmen 20 mit Seitausschubeinrichtung 2 befestigt ist, welche, wie durch einen Doppelpfeil angedeutet, in beide Richtungen seitwärts linear bewegbar ist.

Mit zwei von der Ausschubeinrichtung 2 nach hinten ragenden, voneinander beabstandeten Ansätzen, von welchen hier nur der obere sichtbar ist, wird eine mit dem ersten Drehgelenk 230 gebildete Anlenkung mit im Wesentlichen vertikaler Achse abgestützt, um welche die Künetten-Fräseinheit 3 mit ihrem Gehäuse 31 und dem Künetten-Fräsrad 35 im Winkel nach rechts oder links seitverschwenkbar ist, wie dies durch den gekrümmten Doppelpfeil angedeutet ist.

Mittels auf der Ausschubeinrichtung 2 und am Fräsengehäuse 31 ansetzendem Hydraulikzylinder 23 ist der Seitverschwenk-Winkel je nach Kurvenverlauf einstellbar.

Rückseitig ist an der Fräseinheit 3 eine zweite, mit einem Drehgelenk 340 gebildete Anlenkung angeordnet, mittels welcher die der Fräseinheit 3 unmittelbar folgende Schleppschalungs- und Kabeleinlegeeinheit 4 gegenüber der Fräseinheit 3 ebenfalls im Winkel sowohl nach rechts wie auch nach links seitverschwenkbar ist. Auch diese Seitverschwenkbarkeit ist durch einen gekrümmten Doppelpfeil angedeutet.

Gut zu erkennen sind die im Inneren der Schleppschalungs- und Kabeleinlegeeinheit 4 angeordneten Rollen 43 für eine knickfreie Führung des zu verlegenden, hier nicht gezeigten, Kabels L von oberhalb der Einheiten 3 und 4 nach abwärts in die von der Kabelverlege-Einrichtung 100 bzw. deren Fräseinheit 3 soeben erstellte, in das Bankett B eingetiefte, Kabelkünette K.

Die Schleppschalungs- und Kabeleinlegeeinheit 4 ist mittels den beiden Parallelogramm-Mechaniken 400 gegenüber der Fräseinheit 3 absenkbar, stützt sich am Künettengrund ab, wodurch die Fräseinheit 3 angehoben wird.

Rechts, entlang der mit Seitausschubeinrichtung 2, Fräseinheit 3 und Schleppschalungseinheit 4 gebildeten, in sich doppelt verschwenkfähigen Gesamt- bzw. Kompakt-Verlegeeinheit 10 der Kabelverlegeeinrichtung 100 angeordnet bzw. verlaufend, ist ein das vom Künettenfräsrad 35 durch eine Auswurfsausnehmung 36 im Fräseinheitsgehäuse 31 ausgehobene und seitwärts - hier laufend nach rechts - ausgeworfene grob - bis feinkörnige Künettenmaterial Kmg + Kmf = Km nach rückwärts verbringendes erstes Förderband 50 angeordnet, an welches ein langgestrecktes Sternsieb 55 anschließt, mittels welchem die Abtrennung des feinkörnigen Künettenmaterials Kmf vom groben Künettenmaterial Kmg erfolgt,
wobei das feinkörnige Künettenmaterial Kmf zwischen den Siebsternen 51 nach abwärts auf ein - hier nicht sichtbares - zweites Transportband 56 fällt und von diesem ebenfalls nach rückwärts transportiert und während das grobkörnige Künettenmaterial Kmg auf dem Sternsieb 55 verbleibt und ebenfalls nach rückwärts verbracht wird.

Innerhalb der Einhausung 6 gelangen die beiden Materialströme Kmf und Kmg auf zwei Abwurfschütten 62, 63, wobei das Fein- und Feinstmaterial Kmf örtlich und zeitlich vor dem Grobmaterial Kmg in die Künette K gelangt und das dort eingelegte Kabel ein- und umbettet und erst danach die finale Verfüllung der Künette K mit Grobmaterial Kmg, das gegebenenfalls zusätzlich überschüssiges Feinmaterial Kmf enthält, erfolgt.

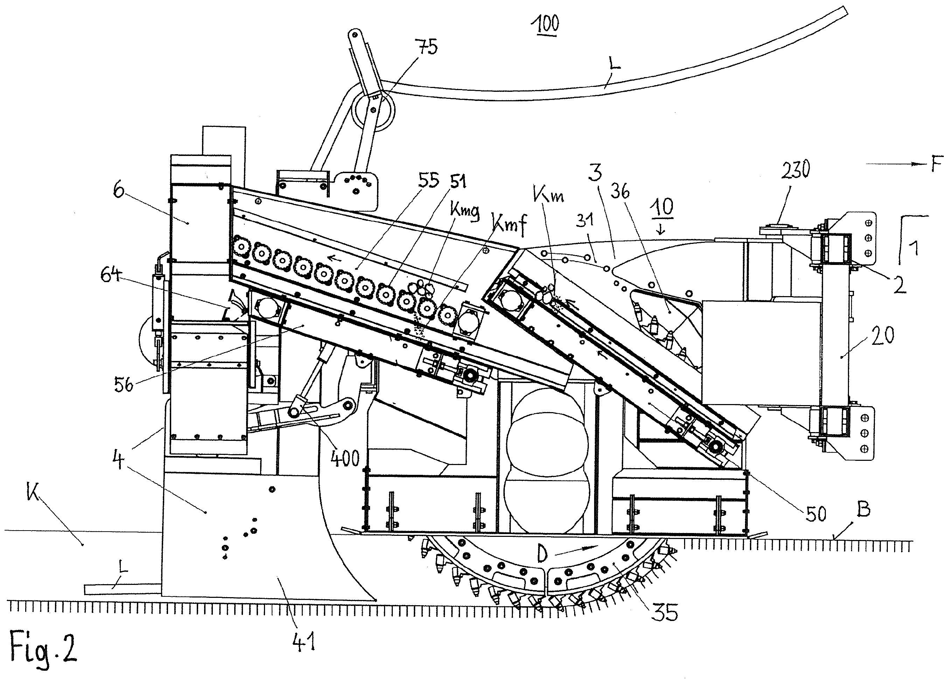

Die Fig. 2 zeigt - bei sonst gleichbleibenden Bezugszeichenbedeutungen - bezogen auf die Fahrtrichtung F der Gesamtverlegeeinheit 10 in Sicht von rechts, deutlich das Fräsrad 35 mit dem Hartmetall-Frässtiften und der Auswurfausnehmung 36 im Gehäuse 31 der Fräseinheit 3, durch welche das gesamte Künettenaushubmaterial Km auf das erste Förderband 50 gelangt und ansteigend von dort dann auf das Sternsieb 55 mit der Vielzahl von drehbaren Siebsternen 51 gelangt.

Unterhalb des Sternsiebs 55 läuft parallel zu demselben ein zweites Förderband 56.

Während vom Sternsieb 55 das Künettengrobmaterial Kmg ansteigend nach rückwärts weiter transportiert wird, fällt das Künettenfeinmaterial Kmf durch das Sternsieb 55 auf das Transportband 56 und beide Materialströme gelangen in die Abwurfbox bzw. Einhausung 6 mit Mengenteilungsklappe 64, von wo aus über die geteilten Schütten 62, 63, siehe hierzu Fig. 1, das Künettenfeinmaterial Kmf örtlich und zeitlich vor dem Künettengrobmaterial Kmg in die Künette K gelangt, in welcher schon das Kabel L abgelegt ist.

Oberhalb der Verlegeeinheit 10 erfolgt die Zuführung des Kabels L, welches über Kabelrollen 75 nach abwärts geführt wird und über hier nicht sichtbare Führungsrollen innerhalb der Schleppschalungseinheit 4 letztlich in die Künette K gelangt. Durchaus sichtbar ist hier noch der Hydraulikzylinder 405 der Parallelogramm-Mechanik 400 für die Absenkung der Schleppschalungseinheit 4, die beispielsweise der Anhebung der Fräseinheit 3 im Falle einer Blockade derselben dienen kann.

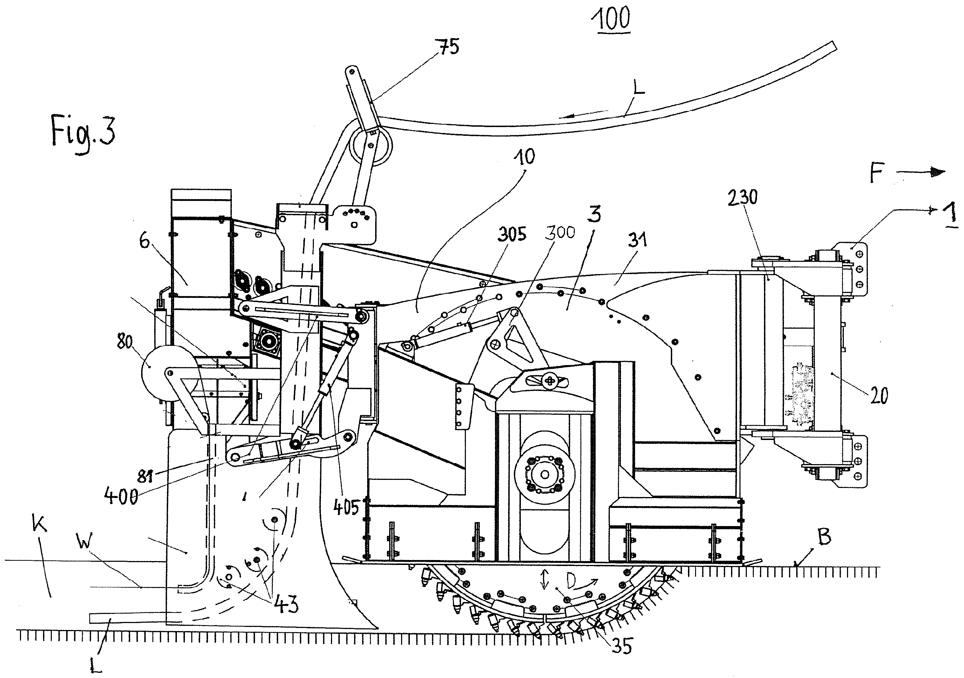

Die in Fig. 3 gezeigte Seitenansicht der in sich beweglichen Kabelverlege-Kompakteinheit 10 von links lässt - bei sonst gleichbleibenden Bezugszeichenbedeutungen - deutlich die Mechanik 300 mit Hydraulikzylinder 305 für die Tiefenverstellung des Fräsrades 35 gegenüber der Fräseinheit 3 erkennen.

Sehr deutlich ist die Parallelogramm-Mechanik 400 mit Hydraulikzylinder 405 für die Relativhöhenverstellung von Fräseinheit 3 und Schleppschalungseinheit 4 zueinander gezeigt.

Weiters ist dort ganz klar der Weg des zu verlegenden Kabels L über die obere Rolle 75 nach abwärts durch die Schleppschalungseinheit 4 und unterhalb von deren Führungsrollen 43 aufgezeigt.

Weiters ist dort die Abspultrommel 80 und der Warnband-Führungskanal 81 für das Ablegen des Kabelwarnbandes W oberhalb des schon in der Künette K abgelegten Kabels L dargestellt.

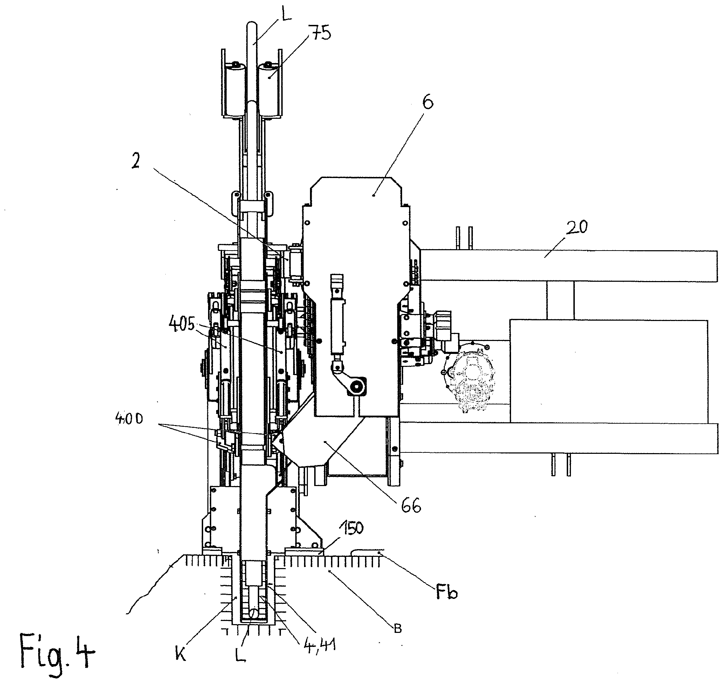

Die Fig. 4 zeigt - bei sonst gleichbleibenden Bezugszeichendeutungen - beidseitig von Fräseinheit 3 und Schleppschalungs- und Kabelverlegeeinheit 4 die Parallelogramm-Mechanik 400 für die gegenseitige Relativhebung oder -senkung dieser beiden Einheiten 3 und 4 sowie deren Hydraulikzylinder 405 und sie zeigt weiters das oberhalb über die oberseitige Rollen 75 geführte Kabel L, das durch die Einheit 4 nach abwärts geführt und zwischen den beiden Schalungsblechen 41 am Boden der Künette K abgelegt wird.

Weiters ist dort die für Künettengrob- und davon getrenntes -feinmaterial und vorgesehene Abwurfgosse 66 gezeigt.

Deutlich sind hier die beiden Schienen des Tragrahmens 20 für die Seitausschubeinheit 2 zu erkennen, sowie der eigentliche, von der Kabelverlege-Kompakteinheit 10 absolut nicht zu berührende oder berührte und schon gar nicht beschädigte Rand der Fahrbahn Fb, also z.B. Asphaltauflage der Straße, entlang welcher das Kabel L in der im Bankett B hergestellten Künette K verlegt ist.

Jede der beim Künettenaushub und der Kabelverlegung direkt eingesetzten Einheiten 3 und 4 ist unterseitig mit einer Schleppleiste 150 ausgestattet, welche für den sicheren Stand der eben genannten Einheiten auf dem Bankett B während der Kabelverlegungsfahrt sorgen.

Als wesentliche Komponenten der Kabelverlege-Einrichtung sind, nochmals zusammengefasst, folgende zu nennen, wobei auf die Fig. 1 bis 4 Bezug genommen ist.
a) Trägerrahmen 20
b) Seit-Ausschubeinrichtung 2
c) Fräseinheit 3 mit Fräsrad 35 und Gehäuse 31
d) Schleppschalungs- und Kabeleinlegeeinheit 4
e) Förderband 50 mit Siebeinheit 55
f) Front- bzw. Trägerfahrzeug 1

### a) Trägerrahmen 20:

Mit dem Trägerrahmen 20 am Träger bzw. Fronfahrzeug 1 ist über eine standardisierte Dreipunktaufhängung die Fräseinheit 3 mit ihrem Fräsradgehäuse 31 verbunden. Auf dem Trägerrahmen 20 befinden sich sämtliche nicht näher gezeigte Steuer- und Antriebselemente. Im Träger 20 ist die Seit-Ausschubeinheit 2 in Form eines Rohr in Rohr-Systems integriert, welches auf Rollen gelagert ist.

### b) Seit-Ausschubeinrichtung 2:

Die Ausschubeinrichtung 2 kann mittels Hydraulikzylinder stufenlos seitlich aus- und
eingefahren werden. Durch das seitwärtige Ausfahren derselben ist es möglich, dass die Fräseinheit 3 gegenüber dem Träger- bzw. Frontfahrzeug 1 seitlich hinter demselben gezogen wird, und somit die Fräsung der Künette K exakt und ohne jede Beeinträchtigung oder Beschädigung des Fahrbahnbelags Fb oder dgl. im seitlichen Straßenstreifen bzw. - bankett B erfolgen kann, und somit der Straßenkörper selbst durch die Baumaßnahmen nicht berührt wird während sich jedoch das Träger- bzw. Frontfahrzeug 1 sicher auf dem festen Straßenkörper in Fahrrichtung F bewegt.

### c) Fräseinheit 3 und deren Gehäuse 31 mit Fräsrad 35:

Die Fräseinheit 3 bzw. das Fräsgehäuse 31 ist über das erste Drehgelenk 230 mit der Seit-Ausschubeinrichtung 2, 20 verbunden. Ein ansteuerbarer Hydraulikzylinder, welcher mit der Ausschubeinrichtung 2 und dem Fräsgehäuse 31 verbunden ist, stabilisiert dasselbe. Durch das Drehgelenk 230 ist es möglich, enge Kurven zu fräsen, da das Fräsgehäuse 31 mittels Hydraulikzylinder 23 der Ausschubeinrichtung 2, 20 in den jeweils erforderlichen Kurvenradius gedrückt wird. Ein Antriebsmotor, welcher am Fräsgehäuse 31 befestigt ist, treibt achsial das Fräsrad 35 an. Das Fräsrad 35 wird gegenläufig zur Fahrtrichtung F angetrieben, siehe dortiger Pfeil D.

An der rechten Vorderseite in Fahrtrichtung F des Fräsgehäuses 31 befindet sich eine Auswurföffnung 36, durch welche das ausgefräste Künettenmaterial Km gedrückt wird. An der unteren Innen- und Aussenseite des Fräsgehäuses 31 befinden sich zwei Schürfleisten, welche dasselbe über zwei Hydraulikzylinder nach abwärts drücken bzw. stufenlos anheben können. Dadurch kann die Frästiefe während des Fräsens stufenlos verändert werden.

### d) Schleppschalungs- und Kabeleinlegeeinheit 4:

Diese Einheit 4 erfüllt drei Aufgaben:
Sie dient als Räumerschild zum Fräsrad 35 hin, sie schützt die Künette K vor Einbrechen bzw. Einrieseln, gewährleistet das geschütze Ablegen der Kabel und/oder Leitungen L und schützt die in die Künette K eingelegten Leitungen L vor dem Eindringen von Grobmaterial.

Die Schleppschalungseinheit 4 befindet sich bzw. beginnt möglichst unmittelbar hinter dem Fräsrad 35 und ihre konkav gekrümmte Vorderfläche ist zu demselben hin mit einem etwas größeren Radius als das Fräsrad 35 selbst ausgebildet. Diese Form der Schleppschalungseinheit 4 verhindert, dass ausgefrästes Material auf der Hinterseite letztlich wieder in die Künette K zurück eingebracht werden kann.

Zwei seitliche Stahlbleche 41 verhindern das Einbrechen der Künette K bzw. das Einrieseln von unerwünschtem Bankett-Untergrund- bzw. Künettenmaterial Km.

Zwischen den beiden seitlichen Schalungsblechen 41 der Schleppschalungseinheit 4 befinden sich die Führungsrollen 43, welche das knickfreie Ablegen der Kabel und/oder Leitungen L gewährleisten. Zusätzlich schützt die Schleppschalungseinheit 4 die frisch verlegten Leitungen L vor dem Eindringen von Grobmaterial. Die höhenverstellbare Vorrichtung 80, 81 auf der Hinterseite der Schleppschalungseinheit 4 dient als Führung zur Ablage des Warnbandes W in jeweils gewünschter Höhe oberhalb des verlegten Kabels L innerhalb der Künette K.

Die Schleppschalungseinheit 4 ist über die Parallelogramm-Mechanik 400 mit dem zweiten Drehgelenk 340 verbunden, welches am Fräsengehäuse 31 befestigt ist. Das Drehgelenk 340 ermöglicht in Kurven die flexible Führung der Schleppschalungseinheit 4 in der Künette K. Die beiden unteren Träger der Parallelogramm-Mechanik 400 sind mit einem Langloch versehen, in welchem die Enden von zwei Hydraulikzylindern mittels eines Bolzens befestigt sind. Das andere Ende der Hydraulikzylinder ist rechts und links am Drehgelenk 340 befestigt.

Mittels der Hydraulikzylinder 405 ist es möglich, die Schleppschalungseinheit 4 stufenlos anzuheben oder abzusenken.

Kommt das Fräsrad 35 zum Beispiel aufgrund von Störstoffen des Bankett-Untergrundes zum Stillstand, kann es mittels der Tiefenverstellungsmechanik 300 für einen erneuten Start angehoben werden.

Langlöcher an den unteren Trägern der beidseitigen Parallelogramm-Mechanik 400 ermöglichen das relative Anheben des Fräsgehäuses 3, ohne dass dabei die Schleppschalungseinheit 4 selbst nach oben gehoben wird. Dadurch wird eine Beschädigung der verlegten Leitungen L und das Einfallen der Künette K wirkungsvoll verhindert.

### e) Förderband 50 mit Siebeinheit 55:

Unmittelbar neben der obenliegenden Auswurföffnung 36 im Fräsgehäuse 31 der
Fräseinheit 3 schließt das ansteigende Förderband 50 an, welches das ausgefräste Künettenmaterial Km in Richtung Schleppschalungseinheit 4 befördert. Am Ende des Förderbandes 50 beginnt die Siebeinrichtung, welche besonders bevorzugter Weise durch ein lang gestrecktes, weiter ansteigendes Sternsieb 55 gebildet ist.

Das Sternsieb 55 trennt das ihr zugeführte Künettenmaterial Km in Fein- und Grobanteile Kmf un Kmg. Die Feinanteile fallen auf ein unterhalb desselben angeordnetes Förderband 56 und werden weiter nach hinten in eine schwenkbare Abwurfgosse transportiert.

Das Grobmaterial Kmg wird während des Aussiebvorganges durch die Rotation der Siebsterne 51 ebenfalls nach rückwärts in die Abwurfgosse 63 befördert. Diese schwenkbare Abwurfgosse 63, welche sich am Ende der genannten Siebeinrichtung befindet, ermöglicht das flexible Ablegen des ausgefrästen Künettenmaterials.

Die Abwurfgosse kann in Richtung Künette K oder in Richtung Fahrbahn geschwenkt werden. Jene Seite der Abwurfgosse 63, die in Richtung Künette K geneigt ist, ist in zwei Rinnen geteilt.

In einer ersten Rinne in Fahrtrichtung wird das ausgesiebte Künettenfeinmaterial Kmf abgelegt, in der zweiten Rinne das Grobmaterial Kmg. Ein höhenverstellbares Abweisblech am Ende der ersten Rinne ermöglicht einen dosierten Eintrag des Feinmaterials Kmf über einen Hohlraum der Schleppschalungseinheit 4 in die Künette K. Überschüssiges Feinmaterial Kmf wird durch das Abweisblech in die zweite Rinne geleitet und vermischt sich dort mit dem Grobmaterial Kmg. Mit diesem, auf die beschriebene Weise erzeugten Korngemisch wird letztlich die Künette K verschlossen.

### f) Träger- bzw. Frontfahrzeug 1:

Als Träger- bzw. Frontfahrzeug 1 können handelsübliche Baumaschinen oder Traktoren eingesetzt werden, die bevorzugter Weise mit einem stufenlosen Fahrantrieb ausgestattet sind. An der Vorderseite des Trägerfahrzeuges 1 befindet sich eine Vorrichtung, welche die Kabeltrommeln aufnehmen kann. Über Führungsrollen oberhalb der Kabelverlege-Kompakteinheit, werden die zu verlegenden Kabel bzw. Leitungen L in die Schleppschalungs- und Kabeleinlegeeinheit 4 geführt und von ihr aus in die Künette K eingelegt.

Durch die Kombination der beschriebenen Einheiten 1, 2, 3, 4 ist mit hoher Sicherheit gewährleistet, dass im Verkehrsweg-Randstreifen bzw. -Bankett B Leitungen und/oder Kabel L verlegt werden können, ohne dass die Fahrbahn Fb einer Straße dabei beschädigt würde. Dies gilt in vollem Maße insbesondere in den Kurvenbereichen von Straßen und deren Banketten.

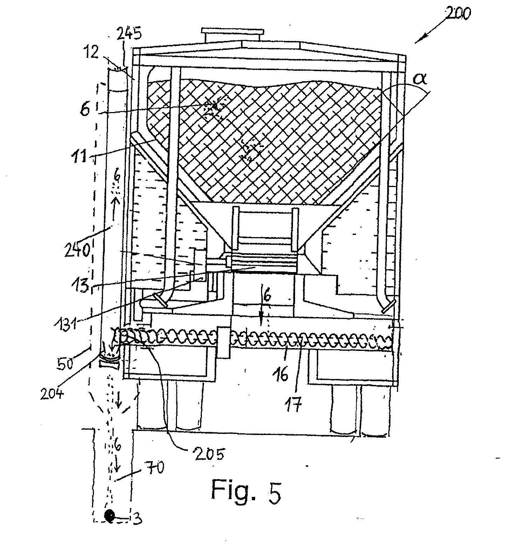

Die das Verfahren illustrierende Fig. 5 zeigt, wie ein von einem speziell ausgerüsteten Traktor 100 gebildetes, erstes, sich mit einer Geschwindigkeit v1 in der Größenordnung von 0 bis etwa 4 km/h nach vorwärts vo bewegendes Fahrzeug 100 vorderseitig eine Abroll-Lagergabel 38 mit auf ihr gelagerter Kabeltrommel 30 trägt.

Von dieser Kabeltrommel 30 wird über eine - hier oberhalb des Fahrerhauses angeordnete - Rolle 31 das unterirdisch zu verlegende Kabel 3 abgezogen, über eine weitere, heckseitig angeordnete Rolle 32 hinter den Traktor 100 nach abwärts geführt und in der unmittelbar vorher mittels im Heckbereich des Traktors 100 angeordneter Radfräse 40 frisch ausgehobene Kabelkünette 70 abgelegt.

Mittels eines der Künettenfräse 40 seitlich beigeordneten Förderbandes 45 wird das unmittelbar vorher ausgehobene Bodenmaterial 7 mit gleicher, aber entgegengesetzt gerichteter Geschwindigkeit minus v1 (-v1) nach rückwärts transportiert und eben nicht, wie bisher, seitlich der eben ergrabenen Kabelkünette 70 abgelegt, was zur hohen Arbeitsgeschwindigkeit des Verfahrens ganz wesentlich beiträgt.

Unmittelbar nach erfolgtem Ablegen des Kabels 3 in die Kabelkünette 70 und des von einem nicht näher gezeigten Abspulgerät im Heckanbau 101 des Traktors 100 abgezogenen und über die Rolle 33 geführten Warnbandes 35 oberhalb des eingelegten Kabels 3 in der Künette 70 wird durch die etwa trichterartige, immer exakt über derselben eine ebenfalls am Traktor 100 heckseitig angeordnete Auswurfgosse 50 kontinuierlich Kabel(fein)sand 6 in jeweils vorgegebener Menge pro Laufmeter Verlegestrecke in die Künette 70 einfließen gelassen, mittels welchem das Kabel 3 und das oberhalb desselben abgelegte Warnband 35 um- und eingebettet und selbstverständlich auch nach oben hin abgedeckt wird.

Das im Zuge des Anfräsens der Kabelkünette 70 mittels der Künettenfräse 40 und dem seitlich derselben beigeordneten Transportband 45 mit der Vorwärts-Fahrgeschwindigkeit v1 des Traktors 100 entgegengesetzter Geschwindigkeit minus v1 (-v1) nach rückwärts rü geförderte und eben nicht seitlich der Künette 70 abgelegte Bodenmaterial 7 wird - unmittelbar nach erfolgter Ein- und Umbettung von Kabel 3 und Warnband 35 mit den Kabel(fein)sand 6 - über die Austragsschütte 41 des nach rückwärts rü fördernden Förderbandes 45 wieder zurück in die Künette 70 eingebracht.

Was nun die Zuförderung und Einbringung des Kabel(fein)sandes 6 durch die etwa trichterartige am Traktor 100 heckseitig angebrachte Sandauswurfgosse 50 in die Kabelkünette 70 betrifft, so dient hierfür ein an sich mit zur Fahrgeschwindigkeit v1 gleicher Geschwindigkeit vorwärts vo fahrendes zweites Fahrzeug 200, im vorliegenden Fall ein LKW mit den Kabel(fein)sand 6 beinhaltender Mulde 201, außen montiertem, schräg aufsteigendem Sand-Transportband 240, dessen Auslaufende 245 laufend genau oberhalb der Sandauswurfgosse 50 des Traktors 100 gehalten wird. Die pro Laufmeter Fahr- und damit Kabelverlegestrecke vorgesehene, in die Kabelkünette 70 einzubringende Menge Kabel(fein)sand wird mittels der vom Fahrerhaus aus regulierbaren Sandauslauf- und -dosiereinrichtung 205 im Heckbereich des Mulden-LKWs 200 auf das Förderband 240 aufgebracht.

Sowohl der Traktor 100 als auch der demselben im Abstand a mit synchroner Geschwindigkeit v2 = v1 folgende Mulden-LKW 200 bewegen sich im Zuge der Kabelverlegung mit einer Geschwindigkeit von 0 bis etwa 4 km/h nach vorwärts vo. Um die konstante und synchrone geringe und regulierte Fahrgeschwindigkeit v1 = v2 der beiden Fahrzeuge 100 und 200 zu gewährleisten, sind beide Fahrzeuge 100, 200 mit computersteuerbaren hydraulischen bzw. hydrostatischen Getrieben ausgestattet.

Anstelle des Sandförderbandes 240 am LKW 200 kann ein Sandförderschlauch treten, dessen offenes Ende gleich direkt oberhalb der Kabelkünette 70 geführt wird und durch welchen der Kabelsand 6 direkt in die Künettte 70 pressluftförderbar ist.

Der in Fig. 2 in Rück- und Schnittansicht gezeigte, das zweite Fahrzeug bildende Mulden-LKW 200 kann ein übliches, z.B. mehrachsiges Transportfahrzeug für trockenes, feinkörniges bzw. pulverförmiges, Material, meist Baumaterial, mit Transportmulde 12 mit schräg im Winkel α nach abwärts aufeinander zu laufenden Flanken 11 sein, an deren, z.B. 60 cm schmalem, Grund ein Kratzband 13 bewegt wird, das mittels Motor 131, dessen Geschwindigkeit mittels der vom Führerhaus des zweiten Fahrzeugs 200 aus einstell- und regulierbaren Steuerungseinheit regelbar ist, antreibbar ist, mittels welchem die jeweils auszubringende Menge Kabel(fein)sand 6 per Laufmeter auf eine quer zur Fahrzeugachse bzw. zur Fahrtrichtung des Mulden-LKWs 200 ausgerichtete Förderrinne 16 mit Austragsschnecke 17, welche beispielsweise links seitlich über den Mulden-LKW 200 mit einem Überstand hinausragt aufgebracht wird.

Der mittels der Austragsschnecke 17 geförderte Kabel(fein)sand 6 wird durch eine Art Trichterorgan 204 oder einen derartigen Schlauch der Sandaustrags- und - dosiereinrichtung 205 auf ein seitlich am Fahrzeug 200 befestigtes, nach aufwärts ansteigendes Förderband 240 mit seinem vorderen Austragsende 245 über die nur mit unterbrochenen Linien gezeichnete Sandaustragsschütte 50 des ersten Fahrzeuges 100 transportiert und fällt durch dieselbe exakt positioniert direkt in die schon mit dem Kabel 3 belegte Kabelkünette 70.

## Patentansprüche

1. Fahrbare Einrichtung (100) für das unterirdische Verlegen zumindest einer flexiblen Leitung, eines Kabels, Kabeleinzieh-Leerrohres oder Fluidtransportschlauches, insbesondere unterhalb der Verkehrswege oder Straßen seitlich begleitenden Bankette bzw. Straßenstreifen, wobei in den Untergrund des Banketts mittels Radfräse einer Fräseinheit eine schmale, jeweils gewünschte Verlegetiefe aufweisende Künette eintiefbar ist, das hierbei ausgefräste Untergrundmaterial seitlich entfernt wird, das bzw. die Kabel und das Warnband in die Künette positionsgerecht einlegbar ist, wobei zur Einbettung der/des eingebrachten Leitung/Kabels oder dgl. in die Künette feinteiliges Untergrundmaterial oder Kabelsand eingebracht und danach das vorher seitlich entfernte ausgefräste Untergrundmaterial in dieselbe wieder einbringbar und verdichtbar ist,
- wobei von einem mit geringer Geschwindigkeit fahrenden Frontfahrzeug das abzulegende Kabel abziehbar und in die soeben erstellte Kabelkünette synchron zur Fahrgeschwindigkeit des Frontfahrzeugs einlegbar ist, und
- wobei über eine über der Kabelkünette geführte Auswurfgosse oder dgl. laufend auf die jeweils momentane Fahrgeschwindigkeit abgestimmte Mengen Feinteilmaterial oder Kabelsand in die Kabelkünette einbringbar ist,
- wobei - insbesondere für die Kabelverlegung entlang eines kurvigen Verkehrswegs - das als Trägerfahrzeug ausgebildete Frontfahrzeug (1) mit rückseitigem Tragrahmen (20) mit Seitausschubeinheit (2) mit einer Fräseinheit (3) mit Fräsrad (31) und einer derselben folgenden Schleppschalungs- und Kabeleinlegeeinheit (4) insgesamt eine fahrbare, kurvengängige, mechanische Gesamt- oder Kompakteinheit (10) bildet,
innerhalb welcher die Fräseinheit (3) und mit ihr das Fräsrad (35) gegenüber dem Frontfahrzeug (1) seitlich nach außen versetzt, also über die Kontur des Frontfahrzeugs (1) seitlich hinausragend positionierbar mit dem Frontfahrzeug (1) über eine erste Anlenkung bzw. ein Drehgelenk (230) an der Seitausschubeinheit (2) mit im Wesentlichen vertikaler Drehachse gegenüber derselben nach beiden Seiten hin jeweils in einem Winkel von bis zu ± 25°, insbesondere bis zu ± 20°, seitverschwenkbar verbunden ist, und
- wobei die der Fräseinheit (3) folgende Schleppschalungs- und Kabeleinlege- sowie Kabelsandeinbringungseinheit (4) ihrerseits mit der Fräseinheit (3) ebenfalls über eine zweite Anlenkung bzw. ein Drehgelenk (340) mit im Wesentlichen vertikaler Achse gegenüber derselben nach beiden Seiten hin - jeweils im Winkel von bis zu ± 25°, insbesondere von bis zu ± 20°, seitverschwenkbar verbunden ist,
**dadurch gekennzeichnet,**
- **dass** dem Fräsrad (35) der Fräseinheit (3) seitlich des Fräsengehäuses (31) ein, mit dem Künettenaushubmaterial (Km) zu beschickendes Förderband (50) beigeordnet ist, welchem ein, vorzugsweise schräg nach rückwärts ansteigendes, langgestrecktes Sternsieb (55) mit einer Vielzahl von auf zu dessen Transportrichtung querstehenden Drehachsen montierten, selbst frei drehbaren Siebsternen (51) für den Transport von durch das Fräsrad (35) ausgehobenem Bankett-Untergrund- bzw. Künettenmaterial (Km) nach rückwärts zur finalen Verfüllung der soeben erstellten Kabelkünette (K) folgt,
- **dass** unterhalb des langgestreckten Sternsiebes (55) ein Förderband (56) für den Abtransport des mittels demselben von Künettengrobmaterial (Kmg) getrennten, feinteiligen Künettenfeinmaterials (Kmf) nach rückwärts angeordnet ist,
- **dass** mittels des Förderbandes (56) ein Feinsieb mit dem feinteiligen Aushubmaterial (Kmf) beschickbar ist, und dass das dort abgetrennte, besonders feinteilige bzw. feinstteilige, im Wesentlichen sandartige, Künettenfeinmaterial zumindest teilweise an Stelle von gesondert zugeführtem Kabelsand oder denselben ergänzend für die Ein- und Umbettung des/der in der Kabelkünette (K) abgelegten Kabels und/oder Leitung (L) einsetzbar ist, und
- **dass** in der, der über der Kabelkünette geführten Auswurfgosse angeordneten, zur Künette hin gerichteten Schüttrinne für das besonders feinteilige bzw. feinstteilige, im Wesentlichen sandartige Künettenmaterial (Kmf) eine den Querschnitt der an das Feinsieb angeschlossenen Schüttrinne überbrückende, eine in ihrer Höhe veränderliche, unterseitige Öffnung freilassende, in ihrer Höhe auf den jeweils per Laufmeter Künette (K) und Kabel (L) gegebenen Bedarf an Kabelein- und -umbettungsfeinmaterial pro Laufmeter Künette (K) und Kabel und/oder Leitung (L) einstellbar ist.

2. Einrichtung nach Anspruch 1, **dadurch gekennzeichnet,**
- **dass** die Abwurfgosse in Richtung Künette (K) oder in Richtung Fahrbahn schwenkbar ist und jene Seite der Abwurfgosse (63), die in Richtung Künette (K) geneigt ist, in zwei Rinnen geteilt ist, wobei in einer ersten Rinne in Fahrtrichtung das ausgesiebte Künettenfeinmaterial (Kmf) ablegbar ist und in der zweiten Rinne das Grobmaterial (Kmg), und
- **dass** ein höhenverstellbares Abweisblech am Ende der ersten Rinne dem dosierten Eintrag des Feinmaterials (Kmf) über den Hohlraum der Schleppschalungseinheit (4) in die Künette (K) ermöglicht und überschüssiges Feinmaterial (Kmf) durch das Abweisblech in die zweite Rinne leitbar ist und sich dort mit dem Grobmaterial (Kmg) vermischt und mit diesem, auf diese Weise erzeugten Korngemisch letztlich die Künette (K) verschließbar ist.

3. Einrichtung nach Anspruch 1 oder 2, **dadurch gekennzeichnet, dass** die im Winkel seitverschwenkbare Fräseinheit (3) mit Fräsrad (31) an einen mit dem Frontfahrzeug (1) bzw. mit dessen Tragrahmen (20) verbundenen Ausschubeinrichtung (2) gebunden und an die durch das bestehende, zu unterfahrende Bankett (B) vorgegebenen topografischen Bedingungen anpassbar, bevorzugt hydraulisch, gegenüber dem Frontfahrzeug (1) - zumindest nach einer Seite hin - linear seitverschiebbar ist.

4. Einrichtung nach einem der Ansprüche 1 bis 3, **dadurch gekennzeichnet, dass**, insbesondere zur Stabilisierung und Stabilhaltung der Wandungen der jeweils soeben erstellten Künette (K), die Schleppschalungs- und Kabeleinlegeeinheit (4) mit beidseitigen, gegebenenfalls in ihrem Abstand voneinander an die jeweilige Künettenbreite (Kb) einstellbaren, Schalungsblechen (41) ausgestattet ist, und zum Fräsrad (31) der Fräseinheit (3) hin, konkav-kurvig ansteigend, möglichst knapp, vorzugsweise bis zu etwa 10 cm, an dasselbe heranreicht.

5. Einrichtung nach einem der Ansprüche 1 bis 4, **dadurch gekennzeichnet, dass** die Fräseinrichtung (3), insbesondere deren Fräsrad (35), beispielsweise für den Fall von dessen Blockierung durch unnachgiebiges Untergrundmaterial, hochhebbar ist, ohne dass die mit der Fräseinrichtung (3) seitverschwenkbar verbundene Schleppschalungs- und Kabeleinlegeeinheit (4) mit den beidseitigen, die Stabilität der Künette (K) praktisch durchgehend sichernden, seitlichen Schalungsblechen (41), in ihrer Höhenposition in der Künette (K) zu verändern ist.

6. Einrichtung nach einem der Ansprüche 1 bis 5, **dadurch gekennzeichnet, dass** an das Drehgelenk (340) für die Schleppschalungs- und Kabeleinlegeeinheit (4) an der Fräseinheit (3) bzw. an deren Gehäuse (31) beidseitig eine Parallelogramm-Mechanik (400) für ein Absenken oder Anheben der Schleppschalungs- und Kabeleinlegeeinheit (4), insbesondere für ein Anheben der Fräseinheit (3), gegebenenfalls zusammen mit dem Fräsrad (3), aus der Künette (K) im Falle einer Blockierung gebunden ist.

## Claims

1. Drivable device (100) for laying at least one flexible line, cable, cable-drawing empty conduit, or fluid transport hose underground, in particular below traffic routes or verges or strips running alongside roads, wherein a narrow trench respectively having a desired laying depth can be cut into the ground surface of the verge by means of a wheel milling cutter of a milling unit, the ground surface material milled out in this way is removed laterally, the cable or cables and the warning tape can be laid in the trench in the correct position, wherein fine particulate ground surface material or cable sand is introduced into the trench for embedding the introduced line/cable or the like and the milled out ground surface material previously removed laterally can then be reintroduced and compressed,
- wherein the cable to be laid can be drawn by a front vehicle driving at a low speed and can be inserted into the cable trench just created synchronously with the driving speed of the front vehicle, and
- wherein quantities of fine particulate material or cable sand, matched to the respectively current driving speed, can be introduced into the cable trench continuously via an ejection chute or the like which is routed via the cable trench,
- wherein, in particular for laying cables along a curved traffic route, the front vehicle (1), which is designed as a carrier vehicle having a rear-side support frame (20) which has a side extension unit (2) having a milling unit (3) with cutting wheel (31) and having a towing formwork and cable insertion unit (4) following the milling unit, overall forms a drivable, curved, mechanical complete or compact unit (10),
within which the milling unit (3) and with it the cutting wheel (35) are laterally outwardly offset relative to the front vehicle (1), thus can be positioned laterally protruding over the contour of the front vehicle (1) and connected to the front vehicle (1) via a first articulation or a swivel joint (230) on the side extension unit (2) with a substantially vertical axis of rotation relative to the side extension unit, so as to be laterally pivotable towards both sides respectively at an angle of up to ± 25°, in particular of up to ± 20°, and
- wherein the towing formwork and cable insertion and cable sand introduction unit (4) following the milling unit (3) in turn is connected to the milling unit (3), also via a second linkage or a rotary joint (340) with a substantially vertical axis relative to the milling unit, so as to be laterally pivotable towards both sides, respectively at an angle of up to ± 25°, in particular of up to ± 20°,
**characterised in that**
- a conveyor belt (50) to be loaded with the excavated trench material (Km) is associated with the cutting wheel (35) of the milling unit (3) laterally of the milling housing (31), which conveyor belt is followed by an elongated star screen (55), preferably obliquely rearwardly upwardly inclining, having a plurality of freely self-rotating screening stars (51) mounted on axes of rotation transverse to its transport direction, for transporting the verge ground surface or trench material (Km) excavated by the cutting wheel (35) backwards for the final backfilling of the cable trench (K) just created,
- a conveyor belt (56) is arranged rearwards below the elongated star screen (55) for the removal of the trench fine particulate material (Kmf) separated from trench coarse-grade material (Kmg) by means of the same,
- a fine sieve can be supplied with the fine particulate excavated material (Kmf) by means of the conveyor belt (56), and the fine particulate trench material separated there, in particular fine or ultrafine substantially sand-like fine particulate trench material, can be used at least partially instead of separately supplied cable sand or as a supplement to the same for the embedding and reburial of the cable and/or line (L) laid in the cable trench (K), and
- in the chute which is arranged in the ejection chute routed via the cable trench and which is directed towards the trench, for the in particular fine particulate or ultrafine substantially sand-like particulate trench material (Kmf), an underside opening bridging the cross-section of the chute connected to the fine sieve, said opening being variable in its height, can be freely adjusted in its height according to the requirements given for fine particulate material respectively per linear metre of trench (K) and cable (L) for embedding and reburial of cable per linear metre of trench (K) and cable and/or line (L).

2. Device according to claim 1, **characterised in that**
- the discharge chute can be pivoted in the direction of the trench (K) or in the direction of the carriageway and that side of the discharge chute (63) which is inclined in the direction of the trench (K) is divided into two channels, wherein the sieved trench fine particulate material (Kmf) can be deposited in a first channel in the direction of travel and the coarse-grade material (Kmg) can be deposited in the second channel, and
- that a height-adjustable deflector plate at the end of the first channel enables metered introduction of the fine particulate material (Kmf) via the cavity of the towing formwork unit (4) into the trench (K) and excess fine particulate material (Kmf) can be guided through the deflector plate into the second channel and is mixed there with the coarse-grade material (Kmg) and the trench (K) can finally be closed with this aggregate produced in this way.

3. Device according to claim 1 or 2, **characterised in that** the milling unit (3), which can be pivoted laterally at an angle and which has the cutting wheel (31), is connected to a lifting device (2) connected to the front vehicle (1) or its support frame (20) and can be adapted, preferably hydraulically, to the topographical conditions predetermined by the current verge (B) to be cut out, to be linearly laterally displaceable with respect to the front vehicle (1), at least towards one side.

4. Device according to any one of claims 1 to 3, **characterised in that**, in particular for the stabilisation and stability maintenance of the walls of each trench (K) just created, the towing formwork and cable insertion unit (4) is equipped with bilateral formwork panels (41), which can optionally be configured to the respective trench width (Kb) in their distance from each other, and said towing formwork and cable insertion unit extends towards the cutting wheel (31) of the milling unit (3), upwardly inclining in a concave-curve, as close as possible, preferably up to approx. 10 cm, to the cutting wheel.

5. Device according to any one of claims 1 to 4, **characterised in that** the milling device (3), in particular its cutting wheel (35), for example in the case of its being blocked by unyielding ground surface material, can be lifted, without the towing formwork and cable insertion unit (4), which is connected laterally pivotably with the milling device (3) and which has the two-sided lateral formwork panels (41) practically continuously securing the stability of the trench (K), having to change in its height position in the trench (K).

6. Device according to any one of claims 1 to 5, **characterised in that** a parallelogram mechanism (400) for lowering or lifting the towing formwork and cable insertion unit (4), in particular for lifting the milling unit (3), optionally together with the cutting wheel (3), out of the trench (K) in the case of a blockage, is connected to the rotary joint (340) for the towing formwork and cable insertion unit (4) on the milling unit (3) or on its housing (31) on both sides.

## Revendications

1. Dispositif mobile (100) pour la pose souterraine d'au moins une canalisation flexible, d'un câble, d'un conduit de tirage de câble ou d'un flexible de transport de fluide, en particulier sous la banquette ou les accotements latéraux de voies de circulation ou de routes, dans lequel une cunette étroite présentant respectivement une profondeur de pose souhaitée peut être creusée dans le sous-sol de l'accotement au moyen d'une roue de fraisage d'une unité de fraisage, le matériau de sous-sol fraisé est ainsi enlevé latéralement, le ou les câble(s) et le ruban de signalisation peuvent être insérés en position alignée dans la cunette, dans lequel pour intégrer la conduite introduite/le câble introduit/ou analogue, un matériau de sous-sol finement divisé ou du sable pour câble est introduit dans la cunette, puis le matériau de sous-sol fraisé enlevé latéralement précédemment peut y être réintroduit ou compacté,
- dans lequel le câble à déposer peut être enlevé d'un véhicule avant conduit à vitesse lente et peut être inséré dans la cunette de câble qui vient d'être créée en synchronisme avec la vitesse de conduite du véhicule avant, et
- dans lequel des quantités de matériau en particules fines ou de sable pour câble, coordonnées avec la vitesse de conduite momentanée respective, peuvent être introduites dans la cunette de câble via un caniveau d'éjection à décharge guidé sur la cunette de câble ou analogue,
- dans lequel, en particulier pour le câblage le long d'une voie de circulation sinueuse, le véhicule avant (1) conçu en tant que véhicule porteur, avec un cadre de support arrière (20), avec une unité de refoulement latéral (2), avec une unité de fraisage (3), avec une roue de fraisage (31), et une unité de coffrage tractée et de pose de câbles (4) à la suite forme dans l'ensemble une unité mécanique d'ensemble ou compacte (10), mobile et pouvant suivre des courbes,
dans laquelle l'unité de fraisage (3) et avec elle la roue de fraisage (35) sont déplacées latéralement vers l'extérieur par rapport au véhicule avant (1), peuvent également être positionnées faisant saillie latéralement au-delà du contour du véhicule avant (1), et sont reliées au véhicule avant (1) pouvant pivoter latéralement via une première articulation ou un premier pivot (230) au niveau de l'unité de refoulement latéral (2) avec un axe de rotation sensiblement vertical par rapport à celle-ci des deux côtés, respectivement sur un angle pouvant atteindre ± 25°, en particulier pouvant atteindre ± 20°, et
- dans lequel l'unité de coffrage tractée, de pose de câbles et d'insertion de câble (4) suivant l'unité de fraisage (3) est à son tour reliée à l'unité de fraisage (3) également via une seconde liaison ou un second pivot (340), présentant un axe sensiblement vertical opposé à celle-ci, en pouvant pivoter latéralement des deux côtés respectivement selon l'angle de pivotement pouvant aller jusqu'à ± 25°, en particulier pouvant aller jusqu'à ± 20°,
**caractérisé en ce que**
- la roue de fraisage (35) de l'unité de fraisage (3), latéralement par rapport au logement de fraisage (31), est associée à une bande transporteuse (50) devant être chargée de matériau d'extraction de cunette (Km), qui suit un crible à étoiles (55) allongé s'étendant longitudinalement de préférence obliquement vers l'arrière avec une pluralité d'étoiles de crible (51) pouvant tourner librement montées sur des axes de rotation transversaux par rapport à sa direction de transport pour transporter le matériau de banquette ou de sous-sol de cunette (Km) excavé par la roue de fraisage (35) vers l'arrière jusqu'au remblayage final de la cunette de câble (K) qui vient d'être créée.
- en dessous du crible à étoiles allongé (55) est agencée vers l'arrière une bande transporteuse (56) destinée à l'enlèvement du matériau fin de cunette (Kmf), finement divisé par l'intermédiaire de celui-ci du matériau grossier de cunette (Kmg).
- au moyen de la bande transporteuse (56), un crible fin peut être chargé avec le matériau d'excavation finement divisé (Kmf), et **en ce que** le matériau fin de cunette séparé, en particulier finement divisé ou dispersé, sensiblement sableux, peut être utilisé au moins partiellement à la place de sable pour câble fourni séparément ou peut être utilisé en complément de celui-ci pour l'intégration et l'enfouissement du câble et/ou de la conduite (L) déposé(e) dans la cunette pour câble (K)
- **en ce que**, dans le caniveau d'éjection à décharge guidé sur la cunette de câble, dans la goulotte dirigée vers la cunette pour le matériau de cunette (Kmf) divisé ou dispersé finement et sensiblement sableux, peuvent être installés une cunette (K) et un câble et/ou une conduite (L), enjambant la section transversale de la goulotte reliée au crible fin, laissant libre une ouverture inférieure de hauteur changeante, pouvant changer sur la base des besoins déterminés par mètre linéaire respectivement de cunette (K) et de câble (L), concernant le matériau fin de pose de câble et d'enfouissement par mètre linéaire.

2. Dispositif selon la revendication 1, **caractérisé en ce que**
- le caniveau de déchargement peut pivoter en direction de la cunette (K) ou en direction de la chaussée et le côté du caniveau de déchargement (63) qui est incliné en direction de la cunette (K) est divisé en deux goulottes, dans lequel le matériau fin de cunette (Kmf) tamisé peut être déposé dans une première goulotte dans le sens de la marche et le matériau grossier (Kmg) dans la seconde goulotte, et
- une tôle déflectrice réglable en hauteur à l'extrémité de la première goulotte permet l'introduction dosée du matériau fin (Kmf) dans la cunette (K) par l'intermédiaire de l'espace creux de l'unité de coffrage tractée (4) et le matériau fin en excès (Kmf) peut être dirigé par la tôle déflectrice dans la seconde goulotte et s'y mélanger au matériau grossier (Kmg) et la cunette (K) peut finalement être fermée avec ce mélange de grains ainsi généré.

3. Dispositif selon la revendication 1 ou 2, **caractérisé en ce que** l'unité de fraisage (3) avec roue de fraisage (31), dont l'angle peut être déplacé latéralement, est liée à un dispositif d'éjection (2) relié au véhicule avant (1) ou à son cadre de support (20) et peut être adaptée à des conditions topographiques prédéfinies par la banquette (B) existante sous-jacente, de préférence par voie hydraulique, et peut être déplacée latéralement de manière linéaire par rapport au véhicule avant (1), au moins vers un côté.

4. Dispositif selon l'une quelconque des revendications 1 à 3, **caractérisé en ce que**, en particulier pour la stabilisation et le maintien de la stabilité des parois de la cunette (K) qui vient d'être créée, l'unité de coffrage tractée et de pose de câbles (4) est équipée de tôles de coffrage (41) des deux côtés, dont la distance entre elles est éventuellement réglable en fonction de la largeur de cunette (Kb) respective, et qui s'approchent le plus possible de la roue de fraisage (31) de l'unité de fraisage (3), en montant de manière concave et courbe, de préférence jusqu'à environ 10 cm.

5. Dispositif selon l'une quelconque des revendications 1 à 4, **caractérisé en ce que** le dispositif de fraisage (3), en particulier sa roue de fraisage (35), peut être soulevé, par exemple en cas de blocage de celle-ci par un matériau de sous-sol inflexible, sans qu'il soit nécessaire de modifier la position en hauteur dans la cunette (K) de l'unité de coffrage tractée et de pose de câbles (4) reliée au dispositif de fraisage (3) de manière à pouvoir pivoter latéralement, avec les tôles de coffrage latérales (41) des deux côtés, qui assurent pratiquement en continu la stabilité de la cunette (K).

6. Dispositif selon l'une quelconque des revendications 1 à 5, **caractérisé en ce qu'**un mécanisme à parallélogramme (400) est relié des deux côtés au pivot (340) pour l'unité de coffrage tractée et de pose de câbles (4) sur l'unité de fraisage (3) ou sur son boîtier (31) pour un abaissement ou un levage de l'unité de coffrage tractée et de pose de câbles (4), en particulier pour un levage de l'unité de fraisage (3), éventuellement conjointement avec la roue de fraisage (3), hors de la cunette (K) en cas de blocage.
